# EUROPEAN PATENT APPLICATION

(11) **EP 4 738 932 A1**
(43) Date of publication of application: **06.05.2026**
(21) Application number: 24383200.3
(22) Date of filing: 01.11.2024
(51) Int. Cl.: H04W 48/02, H04W 8/18, H04W 8/20, H04W 84/06

(54) **METHODS AND SYSTEMS FOR MANAGING TRANSITIONS BETWEEN TERRESTRIAL AND NON-TERRESTRIAL NETWORKS**

(71) Applicant: Vodafone Group Services Limited, Newbury RG14 2FN (GB)
(72) Inventor: URBANO RUIZ, Julio, London, W2 6BY (GB); CHAMI, Youssef, London, W2 6BY (GB); JARUHAR, Shrinjay, London, W2 6BY (GB)
(74) Representative: Boult Wade Tennant LLP

(57) **Abstract**

A method of managing access to one or more services for a user equipment (UE) on a network, wherein the network includes a terrestrial network (TN) and a non-terrestrial network (NTN). The method comprises: receiving (310) a request for connecting the user equipment to the non-terrestrial network; obtaining (320) a public land mobile network identifier (PLMN ID) for the non-terrestrial network; determining (330) a service level for the user equipment based on the public land mobile network identifier for the non-terrestrial network; generating (340) one or more service level indicators for the user equipment based on the determined service level, wherein the one or more service level indicators indicate one or more services of the non-terrestrial network which the user equipment is permitted to utilize; providing (350) the service level indicators to a network management entity, wherein the one or more service level indicators enable the network management entity to provision the user equipment with the one or more services of the non-terrestrial network which the user equipment is permitted to utilize.

## Description

### Field of the invention

The invention relates to methods and systems for managing access to one or more services for a user equipment (UE) when connecting to a non-terrestrial network (NTN), as well as systems and methods for transitioning a user equipment (UE) between a terrestrial network (NT) and non-terrestrial network (NTN).

### Background of the invention

The Mobile Satellite Telecommunication Services industry is undergoing a transformative shift due to the rapid rise of direct-to-device satellite solutions, primarily from direct-to-mobile services, driven by the integration of terrestrial network (TN) and non-terrestrial network (NTN) connectivity and technology developments.

However, a typical non-terrestrial network (NTN) will have a lower bandwidth or maximum throughput than a terrestrial network (TN). That is, an NTN cannot support a volume of transmissions, such as SMS, Voice, or Data, as a TN due to the limitations of the current technology.

Therefore, there is a need to effectively and efficiently utilize the available resources of an NTN.

### Summary of the invention

There is described herein a method of managing access to one or more services for a user equipment (UE) on a network, wherein the network includes a terrestrial network (TN) and a non-terrestrial network (NTN), the method comprising: receiving a request for connecting the user equipment to the non-terrestrial network; obtaining a public land mobile network identifier (PLMN ID) for the non-terrestrial network; determining a service level for the user equipment based on the public land mobile network identifier for the non-terrestrial network; generating one or more service level indicators for the user equipment based on the determined service level, wherein the one or more service level indicators indicate one or more services of the non-terrestrial network which the user equipment is permitted to utilize; providing the service level indicators to a network management entity, wherein the one or more service level indicators enable the network management entity to provision the user equipment with the one or more services of the non-terrestrial network which the user equipment is permitted to utilize.

There is also described herein a method of providing a user equipment with access to one or more services of a non-terrestrial network by a network management entity, comprising: receiving, at the network management entity, a request for connecting the user equipment to the non-terrestrial network; obtaining, one or more service level indicators, wherein the one or more service level indicators indicate one or more services of the non-terrestrial network which the user equipment is permitted to utilize; determining one or more permitted services, of the one or more services of the non-terrestrial network, to provide the user equipment access to based on the service level indicators, wherein: if a service level indicator indicates that the user equipment is not permitted to utilize a service of the non-terrestrial network, then the network management entity prevents the user equipment from utilizing said service; or if a service level indicator indicates that the user equipment is permitted to utilize a service of the non-terrestrial network, then the network management entity enables the user equipment to utilize said service; establishing a connection between the user equipment and the non-terrestrial network; and providing the user equipment with the determined one or more permitted services via the establish connection.

There is also described herein systems configured for carrying out the methods described herein.

There is also described herein a computer program having stored thereon computer readable instructions which, when carried out by the one or more processors, cause the one or more processors to perform the methods described herein.

There is also described herein a computer readable medium having stored thereon the computer program having stored thereon computer readable instructions which, when carried out by the one or more processors, cause the one or more processors to perform the methods described herein.

### Brief description of the drawings

Embodiments of the invention will now be described, by way of example only, with reference to the accompanying drawings, in which:
Figure 1 schematically illustrates an example of a computer system;
Figure 2 depicts a general embodiment of a telecommunications system according to the present invention.
Figure 3 depicts a method of managing access to one or more services for a user equipment (UE) on a network.
Figure 4 depicts a method of providing a user equipment with access to one or more services of a non-terrestrial network by a network management entity.
Figure 5 depicts a part of particular implementation a telecommunications system of the current invention.
Figure 6 depicts a particular implementation a telecommunications system of the current invention.
Figure 7 depicts a particular implementation a telecommunications system of the current invention.
Figure 8 depicts a mobile device connected to the non-terrestrial network.
Figure 9A depicts a session disconnection from the terrestrial network and the migration to the non-terrestrial network.
Figure 9B depicts.
Figure 10A depicts shows a session disconnection from the terrestrial network and the migration to the non-terrestrial network.
Figure 10B depicts the reconnection of the user equipment to the terrestrial network.

### Detailed description of embodiments of the invention

The invention described herein allows for the enablement of managing access to and services of an NTN through the use of a dedicated PLMN ID for the NTN. In the methods and systems described herein a new PLMN ID which is dedicated for services over the NTN is assigned to the NTN, this would make NTN look like a national roaming network (e.g. part of the usual TN) such that eligible user equipment, e.g. mobile devices and the like, can connect to the NTN. Mobile network operators can use any free PLMN ID that is available. That is, the NTN can be assigned a PLMN ID by an MNO which is not currently being used by the MNO. If there is not currently a free PLMN ID available to use as a new PLMN ID for the NTN then the MNO could request a new PLMN ID from telecom regulators. The use of a dedicated PLMN ID for the NTN allows for the management of services on the NTN for different users, as described in the specific embodiments set out below.

In the description that follows and in the figures, certain embodiments of the invention are described. However, it will be appreciated that the invention is not limited to the embodiments that are described and that some embodiments may not include all of the features that are described below. That is, it is to be understood that the present disclosure is not limited to the particular mobile network systems, modules and devices or methods described herein. It will be evident that various modifications and changes may be made herein without departing from the broader scope of the invention as set forth in the appended claims.

Whilst the present disclosure is generally presented in the context of the 3GPP standardised protocol of the Fourth Generation (4G), it will be understood that the teachings of the present disclosure may apply equally to other examples of mobile telecommunications protocols. For example, the teachings presented herein may apply to any situation in which a user equipment (UE) is accessing one or more services of a non-terrestrial network (NTN). One or more devices, base stations, terminals, nodes or modules of a telecommunications network may operate in accordance with one or more standardised protocols. Suitable examples of standardised protocols may include (but are not limited to) any 3GPP standardised protocol including the Fourth Generation (4G), the Long-Term Evolution (LTE), the LTE-Advanced, the Fifth Generation (5G) and/or NR. Further, the networks described herein may include a base station which may be one or more of a Node B, an Evolved Node B (eNodeB) and/or a Next Generation Node B (gNodeB), and more general any radio base station that allows a user equipment (UE), such as a mobile phone, to connect to Third Generation (3G), Fourth Generation (4G) and/or Fifth Generation (5G) mobile networks. In at least some examples contemplated herein, different nodes, modules and/or devices of a telecommunications network may operate in accordance with different standardised protocols. Furthermore, a network may include one or more devices, modules and/or nodes configured to operate in accordance with a plurality of different standardised protocols.

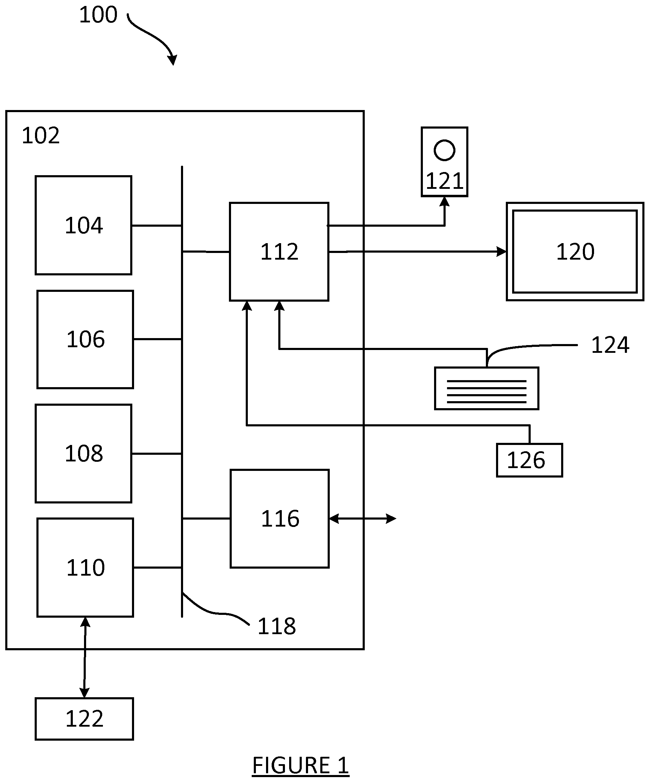

Figure 1 schematically illustrates an example of a computer system 100 which may be present at any of the one or more devices, base stations, terminals, nodes or modules of the telecommunications networks described herein. The system 100 comprises a computer 102. The computer 102 comprises: a storage medium 104, a memory 106, a processor 108, an interface 110, a user output interface 112, a user input interface 114 and a network interface 116, which are all linked together over one or more communication buses 118.

The storage medium 104 may be any form of non-volatile data storage device such as one or more of a hard disk drive, a magnetic disc, an optical disc, a ROM, etc. The storage medium 104 may store an operating system for the processor 108 to execute in order for the computer 102 to function. The storage medium 104 may also store one or more computer programs (or software or instructions or code).

The memory 106 may be any random access memory (storage unit or volatile storage medium) suitable for storing data and/or computer programs (or software or instructions or code).

The processor 108 may be any data processing unit suitable for executing one or more computer programs (such as those stored on the storage medium 104 and/or in the memory 106), some of which may be computer programs according to embodiments of the invention or computer programs that, when executed by the processor 108, cause the processor 108 to carry out a method according to an embodiment of the invention and configure the system 100 to be a system according to an embodiment of the invention. The processor 108 may comprise a single data processing unit or multiple data processing units operating in parallel or in cooperation with each other. The processor 108, in carrying out data processing operations for embodiments of the invention, may store data to and/or read data from the storage medium 104 and/or the memory 106.

The interface 110 may be any unit for providing an interface to a device 122 external to, or removable from, the computer 102. The device 122 may be a data storage device, for example, one or more of an optical disc, a magnetic disc, a solid-state-storage device, etc. The device 122 may have processing capabilities - for example, the device may be a smart card. The interface 110 may therefore access data from, or provide data to, or interface with, the device 122 in accordance with one or more commands that it receives from the processor 108.

The user input interface 114 is arranged to receive input from a user, or operator, of the system 100. The user may provide this input via one or more input devices of the system 100, such as a mouse (or other pointing device) 126 and/or a keyboard 124, that are connected to, or in communication with, the user input interface 114. However, it will be appreciated that the user may provide input to the computer 102 via one or more additional or alternative input devices (such as a touch screen). The computer 102 may store the input received from the input devices via the user input interface 114 in the memory 106 for the processor 108 to subsequently access and process, or may pass it straight to the processor 108, so that the processor 108 can respond to the user input accordingly.

The user output interface 112 is arranged to provide a graphical/visual and/or audio output to a user, or operator, of the system 100. As such, the processor 108 may be arranged to instruct the user output interface 112 to form an image/video signal representing a desired graphical output, and to provide this signal to a monitor (or screen or display unit) 120 of the system 100 that is connected to the user output interface 112. Additionally or alternatively, the processor 108 may be arranged to instruct the user output interface 112 to form an audio signal representing a desired audio output, and to provide this signal to one or more speakers 121 of the system 100 that is connected to the user output interface 112.

Finally, the network interface 116 provides functionality for the computer 102 to download data from and/or upload data to one or more data communication networks. It will be appreciated that the architecture of the system 100 illustrated in Figure 1 and described above is merely exemplary and that other computer systems 100 with different architectures (for example with fewer components than shown in Figure 1 or with additional and/or alternative components than shown in Figure 1) may be used in embodiments of the invention. As examples, the computer system 100 could comprise one or more of: a personal computer; a server or cloud computer; a laptop; other mobile network devices or consumer electronics devices; etc.

It will be appreciated that, insofar as embodiments of the invention are implemented by a computer program, then a storage medium and a transmission medium carrying the computer program form aspects of the invention. The computer program may have one or more program instructions, or program code, which, when executed by a computer carries out an embodiment of the invention. The term "program" as used herein, may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a BluRay disc), or a memory (such as a ROM, a RAM, EEPROM, EPROM, Flash memory or a portable/removable memory device), etc. The transmission medium may be a communications signal, a data broadcast, a communications link between two or more computers, etc.

A terminal in a mobile telecommunications network may generally be understood to be any device which ends a telecommunications link and results in a signal or transmission entering or leaving the mobile telecommunications network. The terminal may be a User Equipment (UE) such as a mobile telephone; a computer terminal; a laptop computer; a network connected wearable device such as a smartwatch, heartrate/heartbeat monitor, blood pressure monitor, pacemakers, hearing aid, or other health monitoring device; a wireless sensor or sensor(s) for monitoring one or more of a pressure, temperature, humidity, or other physical or environmental condition which may form part of a Wireless Sensor Network (WSN); or any other Internet of Things (IoT) device.

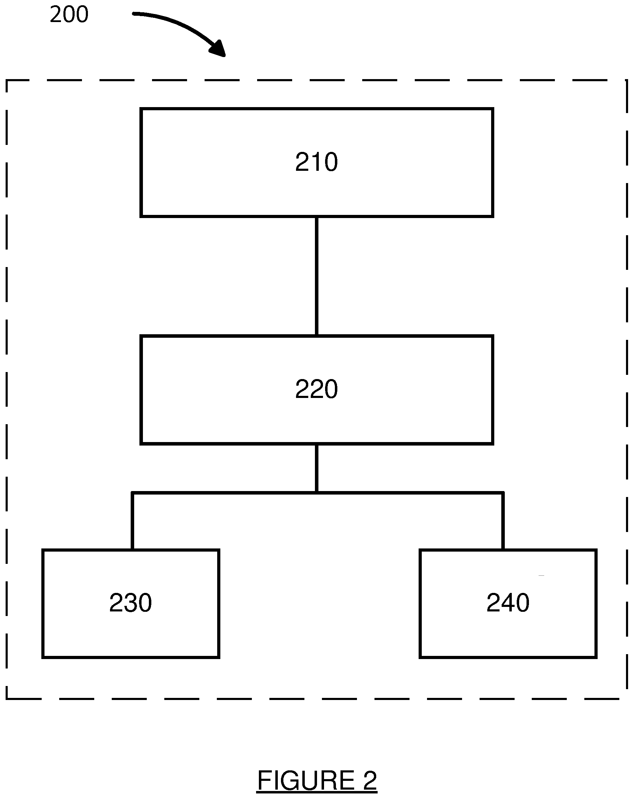

Figure 2 depicts a general embodiment of a telecommunications system 200 according to the present invention. As shown, an IT system 210, is operationally coupled with and/or in communication with a network management entity 220. The IT system 210 may comprise one or more computer systems, such as computer system 100 of figure 1. Computer systems of the IT systems may be operationally coupled with and/or in communication with one another via one or more communication channels. These communication channels may comprise one or more physical channels, selected from one or more of: ethernet cables, USB cables, a LAN network, or any other suitable physical infrastructure. Additionally, or alternatively, the communication channels may comprise one or more wireless communication channels, selected from one or more of: a WiFi network, Bluetooth, WLAN, a cellular network, infrared communications, or any other suitable wireless communication protocol.

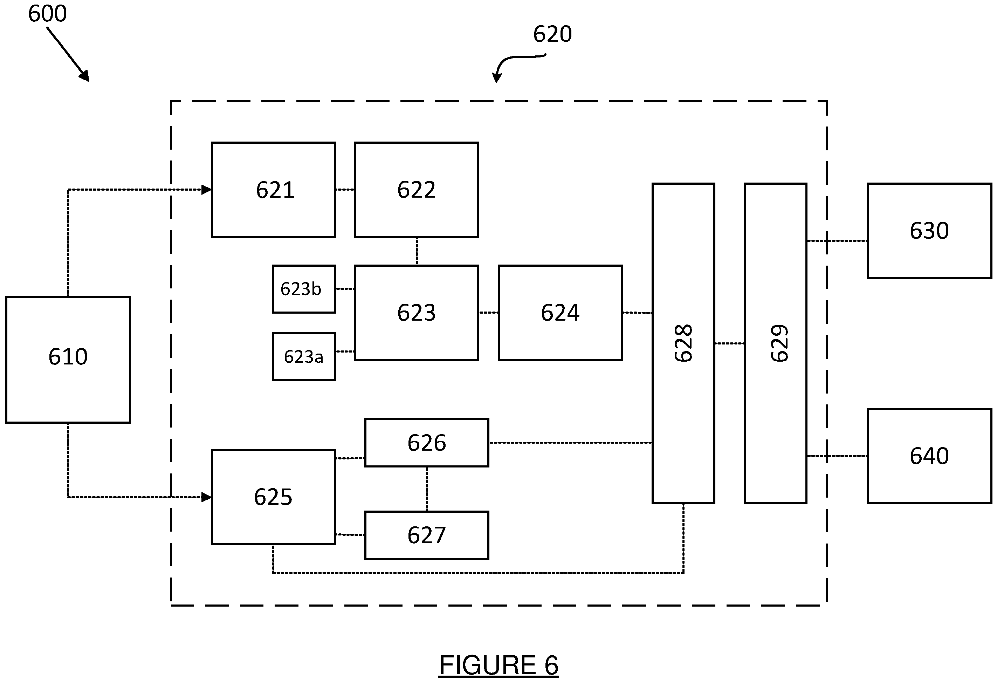

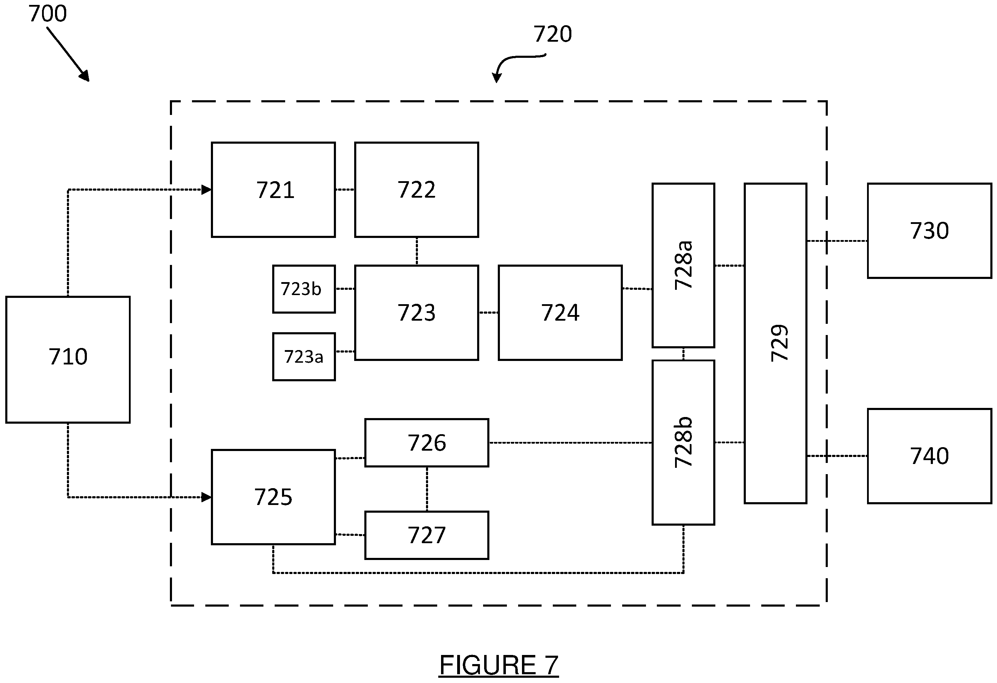

The network management entity 220 is generally any system which is adapted to configure, monitor, and manage a telecommunications network. In the present invention, the network management entity 220 is configured to manage access to services of a terrestrial network, such as terrestrial network 230, and/or a non-terrestrial network, such as non-terrestrial network 240, for one or more UEs, such as a mobile device. The network management entity 220 may comprise one or more elements embodied as physical modules and/or virtual modules which hosted, for example, in one or more cloud servers. In some embodiments, network management entity 220 is a network management entity as shown in figures 6 and 7, which will be described further herein. The network management entity 220, is operationally coupled with and/or in communication with a terrestrial network 230, and a non-terrestrial network 240.

Terrestrial network 230 is a ground based or Earth based wireless communication system or telecommunications network. The terrestrial network comprises a plurality of ground based or Earth based nodes for providing telecommunications functions on the ground or the Earth's surface. The plurality of ground based or Earth based nodes may comprise one or more base stations, cellular towers, or other core network elements for a broadcast network.

Non-terrestrial network 240 is a wireless communication system that operates above the ground or the Earth's surface. The non-terrestrial network may comprise one or more satellites which may be at or more of: low Earth orbit (LEO), medium Earth orbit (MEO), geostationary orbit (GEO), and highly elliptical orbiting (HEO) . The non-terrestrial network may also comprise high-altitude platforms (HAPS) and/or one or more aircraft, such as one or more drones.

The terrestrial network 230 and non-terrestrial network 240 may be configures to provide one or more services, e.g. communication services, to one or more UEs. In some embodiments the terrestrial network 230 and non-terrestrial network 240 provide one or more services to a UE, where the UE may be a mobile device. The services may be selected from: an SMS service, a voice service, and a data service.

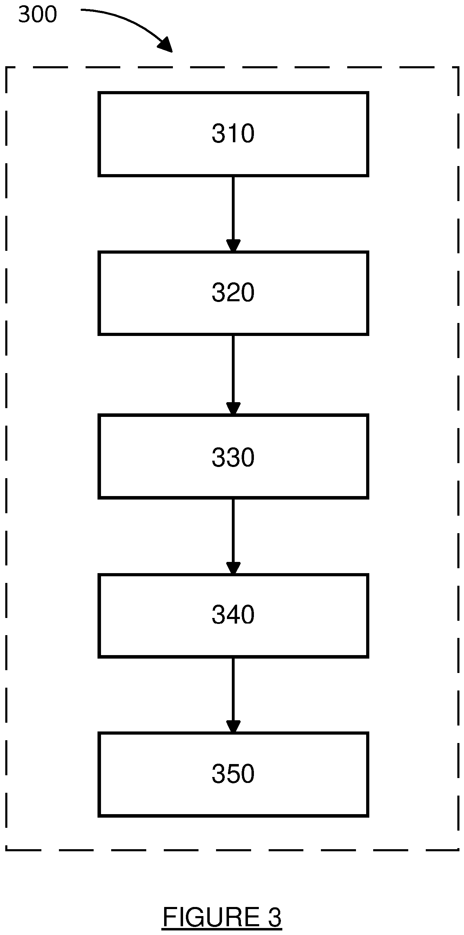

Figure 3 depicts a flow diagram of a method 300 of managing access to one or more services for a user equipment (UE) on a network, wherein the network includes a terrestrial network (TN) 230 and a non-terrestrial network (NTN) 240. The method 300 may be performed by the IT system 210.

Step 310, of the method 300, comprises receiving a request for connecting the user equipment to the non-terrestrial network 240. The request may be sent from the UE and be obtained by the IT system 210. The request may be sent by the UE when the UE is unable to connect to the terrestrial network 240. For example, the UE may be out of a coverage area of the terrestrial network, such that services of the terrestrial network, e.g. mobile communication services, cannot be provided by the terrestrial network to the UE. As such, the UE may seek to make use of services of the NTN when it is unable to use the TN for such services. This loss of connectivity may occur in remote or sparsely populated areas where network coverage is poor. These areas could include border regions or particular internal regions of countries, where such regions may be mountainous, wilderness, or other uninhabitable terrain.

Next, the method 300 comprises a step of obtaining 320 a public land mobile network identifier (PLMN ID) for the non-terrestrial network. As previously described, a new PLMN ID which is dedicated for services over the NTN is assigned to the NTN by an MNO. In step 320 the PLMN ID for the NTN which has been assigned by the MNO is retrieved or obtained, for example from a database, broadcast signal, or otherwise.

The method 300 further comprises determining 330 a service level for the user equipment based on the public land mobile network identifier (PLMN ID) for the non-terrestrial network 240. The determined service level may correspond to a subscription level of the user of the user equipment, for example a mobile device subscription or tariff plan for a mobile device. The dedicated PLMN ID for the NTN allows for the specification of particular services or tariffs for a user equipment, such as a mobile device. That is, the user equipment may have a first set of services, or a tariff associated with any usual PLMN ID on a mobile network which comprises at least part of a terrestrial network. The user equipment may also have a second set of services, or a tariff associated with the PLMN ID of the non-terrestrial network. Therefore, based on the PLMN ID to which the user equipment is requesting to connect, such as the PLMN ID of NTN, a service level for the user equipment can be determined. In some embodiments, there may be various tariff plans for a mobile device which specify which services a user may access when connected to the NTN. These may comprise: (i) an SMS only service; (ii) an SMS+Voice only service; or (iii) an SMS+Voice+Data service. Any of these tariffs for the NTN may be used alongside or in conjunction with a tariff where the UE has full access to TN services, such as SMS+Voice+Data services.

The method 300, further comprises generating 340 one or more service level indicators for the user equipment based on the determined service level, wherein the one or more service level indicators indicate one or more services of the non-terrestrial network which the user equipment is permitted to utilize. In some embodiments, each of the one or more service level indicators is associated with a respective service, the services comprising: an SMS service, a voice service, and a data service. That is, the service level indicators as a whole may indicate which of the tariffs for the NTN is associated with the user equipment. For example, where the user equipment is on an SMS+Voice only tariff, the one or more service level indicators may comprise a first service level indicator indicating that the user equipment is permitted to utilize the SMS service of the NTN, a second service level indicator indicating that the user equipment is permitted to utilize the voice service of the NTN, and a third service level indicator indicating that the user equipment is not permitted to utilize the data service of the NTN.

The method 300 further comprises providing 350 the service level indicators to a network management entity, wherein the one or more service level indicators enable the network management entity to provision the user equipment with the one or more services of the non-terrestrial network which the user equipment is permitted to utilize. In some embodiments, where each of the one or more service level indicators is associated with a respective service, each of the service level indicators may enable the network management entity to provision the user equipment with the respective service or may prevent or block the user equipment from accessing said respective service. For example, in accordance with the example above, where the user equipment is on an SMS+Voice only tariff, the one or more service level indicators indicate that the user equipment is permitted to utilize the SMS and Voice services of the NTN such that the network management entity can provision the user equipment with the SMS and Voice services over the NTN and/or enable the user equipment to utilize the SMS and Voice services of the NTN. Whereas, in this example, where the user equipment is on an SMS+Voice only tariff, the one or more service level indicators indicate that the user equipment is not permitted to utilize the data service of the NTN, such that the network management system will prevent or block the user equipment from accessing data services of the NTN.

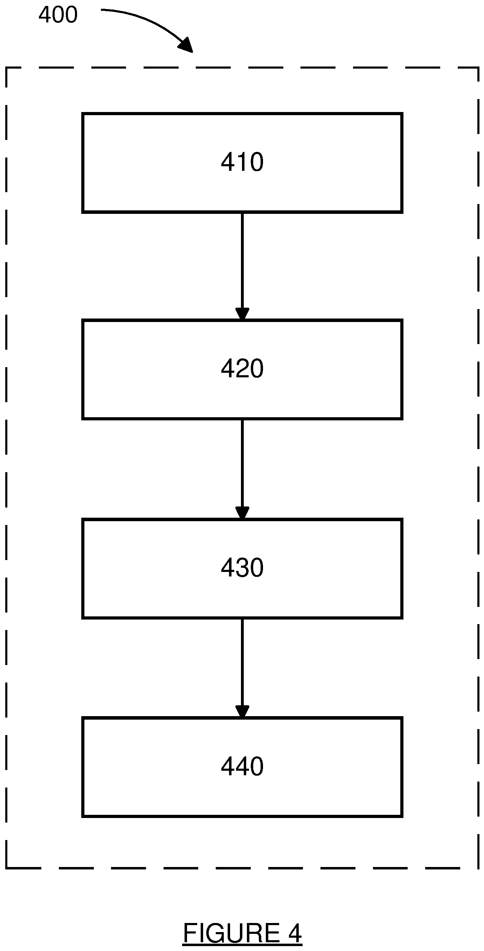

Figure 4 depicts a method 400 of providing a user equipment with access to one or more services of a non-terrestrial network by a network management entity, such as the network management entity of figure 2.

The method 400 comprises receiving 410, at the network management entity, a request for connecting the user equipment to the non-terrestrial network. The request for connecting the user equipment to the non-terrestrial network may be sent from the UE and be obtained by the IT system 210. Additionally, and or alternatively, the request may be obtained by a portion of the network management entity based on a received request to connect to a non-terrestrial network, and/or a network having a different PLMN ID to the current network of the user equipment, from the user equipment.

The request may be sent by the UE when the UE is unable to connect to the terrestrial network 240. For example, the UE may be out of a coverage area of the terrestrial network, such that services of the terrestrial network, e.g. mobile communication services, cannot be provided by the terrestrial network to the UE. As such, the UE may seek to make use of services of the NTN when it is unable to use the TN for such services. This loss of connectivity may occur in remote or sparsely populated areas where network coverage is poor. These areas could include border regions or particular internal regions of countries, where such regions may be mountainous, wilderness, or other uninhabitable terrain.

The method 400, further comprises a step of obtaining 420, one or more service level indicators, wherein the one or more service level indicators indicate one or more services of the non-terrestrial network which the user equipment is permitted to utilize. The service level indicators may be obtained from, or provided by, the IT system 210. As described with reference to figure 3 above, the one or more service level indicators indicate one or more services of the non-terrestrial network which the user equipment is permitted to utilize. In some embodiments, each of the one or more service level indicators is associated with a respective service, the services comprising: an SMS service, a voice service, and a data service. That is, the service level indicators as a whole may indicate which of the tariffs for the NTN is associated with the user equipment. For example, the service level indicators may indicate that the user equipment is permitted to utilize: (i) only an SMS service of the NTN; (ii) only SMS+Voice services of the NTN; or (iii) SMS+Voice+Data services of the NTN.

The method 400, further comprises a step of determining 430 one or more permitted services, of the one or more services of the non-terrestrial network, to provide the user equipment access to based on the service level indicators. If a service level indicator indicates that the user equipment is not permitted to utilize a service of the non-terrestrial network, then the network management entity prevents the user equipment from utilizing said service. Whereas, if a service level indicator indicates that the user equipment is permitted to utilize a service of the non-terrestrial network, then the network management entity enables the user equipment to utilize said service. For example, if the one or more service level indicators indicate that the user equipment is permitted to utilize SMS and voice service of the NTN, but that the user equipment is not permitted to utilize the data service of the NTN, then the network management entity will enable the user equipment to utilize said service, but will prevent the user equipment from utilizing the data service of the NTN.

The method 400, further comprises a step of establishing 440 a connection between the user equipment and the non-terrestrial network; and providing the user equipment with the determined one or more permitted services via the establish connection. That is, a connection between the user equipment and the non-terrestrial network may be established such that the user can utilize services of the non-terrestrial network which it is permitted to do so. For example, where the user equipment is permitted to utilize SMS and voice service of the NTN, but the user equipment is not permitted to utilize the data service of the NTN, and the network management entity has enabled the user equipment to utilize said service, but prevented the user equipment from utilizing the data service of the NTN, the user equipment may utilize the SMS and voice services of the NTN using the established connection.

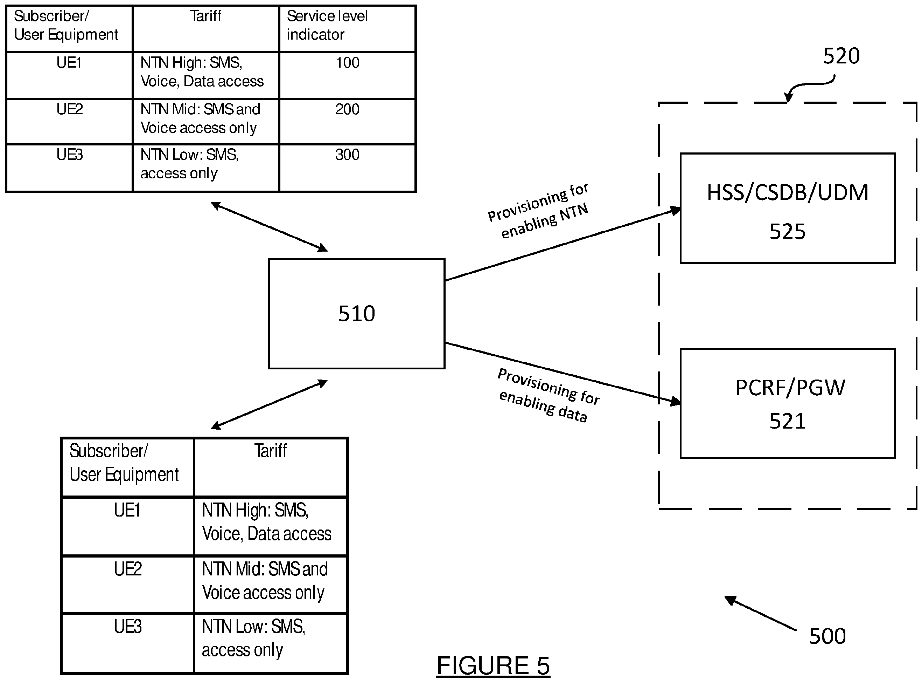

Figure 5 shows a part of particular implementation a telecommunications system 500 of the current invention in the context of the 3GPP standardised protocol of the Fourth Generation (4G).

As shown in figure 5, an IT system 510, is operationally coupled with and/or in communication with a network management entity 520. The IT system 510 may comprise one or more computer systems, such as computer system 100 of figure 1. Computer systems of the IT systems may be operationally coupled with and/or in communication with one another via one or more communication channels. These communication channels may comprise one or more physical channels, selected from one or more of: ethernet cables, USB cables, a LAN network, or any other suitable physical infrastructure. Additionally, or alternatively, the communication channels may comprise one or more wireless communication channels, selected from one or more of: a WiFi network, Bluetooth, WLAN, a cellular network, infrared communications, or any other suitable wireless communication protocol.

The IT system 510 may be configured to carry out a method 300 of managing access to one or more services for a user equipment (UE) on a network, wherein the network includes a terrestrial network (TN) 230 and a non-terrestrial network (NTN) 240. The IT system 510 may be configured to receive a request for connecting the user equipment to the non-terrestrial network 240. The request may be sent from the UE, and be obtained by the IT system 510. The request may be sent by the UE when the UE is unable to connect to the terrestrial network 240. For example, the UE may be out of a coverage area of the terrestrial network, such that services of the terrestrial network, e.g. mobile communication services, cannot be provided by the terrestrial network to the UE. As such, the UE may seek to make use of services of the NTN when it is unable to use the TN for such services. This loss of connectivity may occur in remote or sparsely populated areas where network coverage is poor. These areas could include border regions or particular internal regions of countries, where such regions may be mountainous, wilderness, or other uninhabitable terrain.

The IT system 510 may further be configured to obtain 320 a public land mobile network identifier (PLMN ID) for the non-terrestrial network. As previously described, a new PLMN ID which is dedicated for services over the NTN is assigned to the NTN by an MNO. The IT system may be configured to obtain the PLMN ID for the NTN which has been assigned by the MNO, for example by retrieving the PLMN ID for the NTN from a database, broadcast signal, or otherwise.

The IT system 510 may further be configured to determine 330 a service level for the user equipment based on the public land mobile network identifier (PLMN ID) for the non-terrestrial network 240. The determined service level may correspond to a subscription level of the user of the user equipment, for example a mobile device subscription or tariff plan for a mobile device. The dedicated PLMN ID for the NTN allows for the specification of particular services or tariffs for a user equipment, such as a mobile device. That is, the user equipment may have a first set of services, or a tariff associated with any usual PLMN ID on a mobile network which comprises at least part of a terrestrial network. The user equipment may also have a second set of services, or a tariff associated with the PLMN ID of the non-terrestrial network. Therefore, based on the PLMN ID to which the user equipment is requesting to connect, such as the PLMN ID of NTN, a service level for the user equipment can be determined. In some embodiments, there may be various tariff plans for a mobile device which specify which services a user may access when connected to the NTN. These may comprise: (i) an SMS only service; (ii) an SMS+Voice only service; or (iii) an SMS+Voice+Data service. Any of these tariffs for the NTN may be used alongside or in conjunction with a tariff where the UE has full access to TN services, such as SMS+Voice+Data services.

An example of a database comprising tariff plans for different user equipment is shown in figure 5. As shown, the database may comprise information associating each user equipment to a respective tariff. For example, the database comprises three user equipment, UE1, UE2, and UE3. UE1 is associated with an "NTN High" tariff which may correspond to the user equipment being permitted to utilize SMS, Voice, and Data services of the NTN. UE2 is associated with an "NTN Mid" tariff which may correspond to the user equipment being permitted to utilize only SMS and Voice services of the NTN, and not data services of the NTN. UE3 is associated with an "NTN Low" tariff which may correspond to the user equipment being able to utilize only the SMS services of the NTN, and not the voice or data services of the NTN.

In the embodiment shown in figure 5, the network management entity 520, comprises at least one of a Home Subscriber Server (HSS), a Central Subscriber Database (CSDB), and a Unified data management (UDM). The at least one of the Home Subscriber Server (HSS), the Central Subscriber Database (CSDB), and the Unified data management (UDM), may be configured to limited services of the NTN for a user equipment, such as SMS only or SMS+Voice only. The IMS (Voice) APN may be suppressed in at least one of the Home Subscriber Server (HSS), the Central Subscriber Database (CSDB), to prevent a user equipment from utilizing voice services of the NTN.

The network management entity 520 may also further comprise at least one of a Policy and Charging Rules Function (PCRF) and a Packet Data Network Gateway (PGW) 521. The Policy and Charging Rules Function (PCRF) and the Packet Data Network Gateway (PGW) 521 may be used to prevent the user equipment from utilizing the data services of the NTN. For example, the Data APN may be blocked in the Policy and Charging function (PCRF) with the help of Data Core PGW. In some examples, the mechanism described above will allow for user equipment connected to the NTN to use the PLMN ID from HSS for SMS but blocked for IMS Voice by HSS 525 and blocked for data usage by PCRF and PGW 521.

The IT system 510 may further be configured to generate one or more service level indicators for the user equipment based on the determined service level, wherein the one or more service level indicators indicate one or more services of the non-terrestrial network which the user equipment is permitted to utilize. In some embodiments, each of the one or more service level indicators is associated with a respective service. The services may comprise: an SMS service, a voice service, and a data service. That is, the service level indicators as a whole may indicate which of the tariffs for the NTN is associated with the user equipment. For example, where the user equipment is on an SMS+Voice only tariff, the one or more service level indicators may comprise a first service level indicator indicating that the user equipment is permitted to utilize the SMS service of the NTN, a second service level indicator indicating that the user equipment is permitted to utilize the voice service of the NTN, and a third service level indicator indicating that the user equipment is not permitted to utilize the data service of the NTN. Figure 5 shows an example of the one or more service level indicators which may be generated by the IT system. In particular, the IT system 520 may generate an indicator with a value corresponding to the tariff of the user equipment. For example, for UE1 of the above example which has an "NTN High" tariff corresponding to the user equipment being permitted to utilize SMS, Voice, and Data services, a value generated which corresponds to the "NTN High" tariff. For UE2, which has an "NTN Mid" tariff which may correspond to the user equipment being permitted to utilize only SMS and Voice services of the NTN, and not data services of the NTN, a different value may be generated which corresponds to the "NTN Mid" tariff. As shown in figure 5, different service level indicators may be generated for provision to the network management system. For example, a first service level indicator may be associated with associated with the SMS service and/or the voice service of the NTN. A second service level indicator may be associated with data services of the NTN. Additionally, the first service level indicator may be generated for provision to at least one of a Home Subscriber Server (HSS), a Central Subscriber Database (CSDB), and a Unified data management (UDM), and the second service level indicator may be generated for provision to at least one of a Policy and Charging Rules Function (PCRF) and a Packet Data Network Gateway (PGW). At least one of the one or more service level indicators may correspond to a request service message (RSI) or an RSA message.

The IT system 510 may further be configured to provide 350 the service level indicators to a network management entity, wherein the one or more service level indicators enable the network management entity to provision the user equipment with the one or more services of the non-terrestrial network which the user equipment is permitted to utilize. In some embodiments, where each of the one or more service level indicators is associated with a respective service, each of the service level indicators may enable the network management entity to provision the user equipment with the respective service or may prevent or block the user equipment from accessing said respective service. For example, in accordance with the example above, where the user equipment is on an SMS+Voice only tariff, the one or more service level indicators indicate that the user equipment is permitted to utilize the SMS and Voice services of the NTN such that the network management entity can provision the user equipment with the SMS and Voice services over the NTN and/or enable the user equipment to utilize the SMS and Voice services of the NTN. Whereas, in the example where the user equipment is on an SMS+Voice only tariff, the one or more service level indicators indicate that the user equipment is not permitted to utilize the data service of the NTN, such that the network management system will prevent or block the user equipment from accessing data services of the NTN.

In the embodiment shown in figure 5, the IT system 510 may be configured to provide a first service level indicator to at least one of a Home Subscriber Server (HSS), a Central Subscriber Database (CSDB), and a Unified data management (UDM) 525. The first service level indicator may be associated with associated with the SMS service and/or the voice service of the NTN. The IT system 510 may be further configured to provide a second service level indicator to at least one of a Policy and Charging Rules Function (PCRF) and a Packet Data Network Gateway (PGW) 521. The second service level indicator may be associated with data services of the NTN.

In the example where the user equipment is on an SMS+Voice only tariff, i.e. the "NTN Mid" tariff, the IT system 510 may be configured to provide a first service level indicator to at least one of a Home Subscriber Server (HSS), a Central Subscriber Database (CSDB), and a Unified data management (UDM), the first service level indicator being associated with associated with the SMS service and the voice service of the NTN. The first service level indicator indicated that the user equipment is permitted to utilize the SMS and Voice services of the NTN, and thereby enables the least one of the Home Subscriber Server (HSS), the Central Subscriber Database (CSDB), and the Unified data management (UDM), to permit the user equipment, e.g. UE2, to utilize the SMS and Voice services of the NTN. In this example, the IT system 520 may be further configured to provide the service level indicator associated with data services to at least one of a Policy and Charging Rules Function (PCRF) and a Packet Data Network Gateway (PGW). Where the user equipment, e.g. UE2, is on the SMS+Voice only tariff, i.e. the "NTN Mid" tariff, the second service level indicator indicates that the user equipment is not permitted to utilize the data service of the NTN, and thereby enables the at least one of the Policy and Charging Rules Function (PCRF) and the Packet Data Network Gateway (PGW) to block or prevent the user equipment, e.g. UE2, from utilizing the data service of the NTN.

Figure 6 shows a particular implementation of a telecommunication system 600 of the current invention in the context of the 3GPP standardised protocol of the Fourth Generation (4G). Whilst the invention comprises the implementation of the telecommunication system 600 shown in figure 6, and the associated method, it will be appreciated that the implementation of the telecommunications system 600 may be modified or adapted in accordance with any of the previous or other embodiments described. That is, this implementation may perform the method according to figures 3 or 4, described above, and/or may comprise the elements of the part of particular implementation the telecommunications system 500 shown in figure 5 above.

The telecommunication system 600 comprises an IT system 610. The IT system 610 of the telecommunication system 600 of figure 6 may be the IT system 510 described with respect to figure 5 above, or the IT system 210 as described with respect to figure 2.

The telecommunication system 600 further comprises a network management system 620. The network management system 620 of the telecommunication system 600 of figure 6 may be the network management system 520 described with respect to figure 5 above, or the network management system 220 as described with respect to figure 2. The network management system 620 is in communication with and/or operatively coupled to the IT system 610. The network management system 620 comprises at least one of a Home Subscriber Server (HSS), a Central Subscriber Database (CSDB), and a Unified data management (UDM) 621. The at least one of the Home Subscriber Server (HSS), the Central Subscriber Database (CSDB), and the Unified data management (UDM) 625, may be configured to limited services of the NTN for a user equipment, such as SMS only or SMS+Voice only. The IMS (Voice) APN may be suppressed in at least one of the Home Subscriber Server (HSS), the Central Subscriber Database (CSDB) 625, to prevent a user equipment from utilizing voice services of the NTN. The network management system may further comprise a Central Monitoring System (CMS) 627 and a Multimedia messaging service (MSS) 626.

The network management system 620 further comprises a mobile management entity (MME) 628 in communication with and/or operatively coupled to the at least one of the Home Subscriber Server (HSS), the Central Subscriber Database (CSDB), and the Unified data management (UDM) 625. The MME 628 may be further in communication with and/or operatively coupled to the CMS 627 and/or the MSS 626. An SGs interface may be positioned between the MME 625 and the MSS 626. SMS services may go over the SGs interface. Where the IMS (Voice) APN is suppressed, i.e. the UE is on an SMS only tariff, the SMS services may go over the SGs interface. Where the UE is on an SMS+Voice only tariff, e.g. the "NTN mid" tariff, the user equipment is able to make Voice calls over IMS and send SMS over the SGs or IMS interface based on the deployment. If there is no SGs interface between the MME and the MSS then the user equipment can send SMS over IMS.

The network management system 620 further comprises a Unified Data Repository (UDR) and/or a Subscription Profile Repository (SPR) 621 in communication with and/or operatively coupled to the IT system 610.

The network management system 620 further comprises a Policy and Charging Rules Function (PCRF) and a Packet Data Network Gateway (PGW). The Policy and Charging Rules Function (PCRF) 622 and the Packet Data Network Gateway (PGW) 623 are in communication with and/or operatively coupled to the Unified Data Repository (UDR) and/or the Subscription Profile Repository (SPR) 621. The Policy and Charging Rules Function (PCRF) 622 and the Packet Data Network Gateway (PGW) 623 may be used to prevent the user equipment from utilizing the data services of the NTN. For example, the Data APN may be blocked in the Policy and Charging function (PCRF) 622 with the help of Data Core PGW623. The Packet Data Network Gateway (PGW) 623 may be in communication with and/or operatively coupled to an IP Multimedia Subsystem or IP Multimedia Core Network Subsystem (IMS) 623a and a Converged Charging Systems (CCS) 623b. In some examples, the mechanism described above will allow for user equipment connected to the NTN to use the PLMN ID from HSS for SMS but blocked for IMS Voice by HSS and blocked for data usage by PCRF and PGW.

The Packet Data Network Gateway (PGW) 623 is in communication with and/or operatively coupled to a signalling gateway (SGW) 624 which is in turn in communication with and/or operatively coupled to the MME 628.

In the embodiment shown in figure 6, the MME 628 is a single MME configured to serve both the PLMN ID of the terrestrial network 630 and the PLMN ID of the non-terrestrial network 640. As such, it is possible to use existing core networks including an existing MME to enable the user equipment to utilize services of the NTN. In the embodiment shown in figure 6, the existing MME 628 can serve 2 PLMN IDs (one TN PLMN ID and another NTN PLMN ID) and provide a user equipment with services for both TN 630 and NTN 640 when user moves between the TN 630 and the NTN 640, and vice-versa. In some examples, the MME 628 uses the 3GPP feature of gateway core network (GWCN) or Home Public Land Mobile Network (HPLMN) in the MME. In some examples, the MME 628 sends a separate realm PLMN ID to the HSS/CSDB/UDM for both PLMN IDs to determine the tariff of the user equipment, e.g. if the user equipment has an "NTN high" tariff, and subsequently permit or deny the user equipment to utilize services of the NTN.

The MME 628 may further be in communication with and/or operatively connected to a security gateway (SecGW) 629. The security gateway (SecGW) 629 is in communication with and/or operatively connected to the terrestrial network (TN) 630 and the non-terrestrial network (NTN) 640.

The network management entity 620, may be configured to carry out the method described with reference to figure 2 above.

The network management entity 620 may be configured to carry out a method of providing a user equipment with access to one or more services of a non-terrestrial network 640, as follows.

Firstly, the network management entity 620 may receive a request for connecting the user equipment to the non-terrestrial network 640. The request for connecting the user equipment to the non-terrestrial network 640 may be sent from the UE and be obtained by the IT system 210. Additionally, and or alternatively, the request may be obtained by a portion of the network management entity 620, such as the MME 628, based on a received request to connect to a non-terrestrial network, and/or a network having a different PLMN ID to the current network of the user equipment, from the user equipment.

The request may be sent by the UE when the UE is unable to connect to the terrestrial network 630. For example, the UE may be out of a coverage area of the terrestrial network 630, such that services of the terrestrial network, e.g. mobile communication services, cannot be provided by the terrestrial network 630 to the UE. As such, the UE may seek to make use of services of the NTN 640 when it is unable to use the TN 630 for such services. This loss of connectivity may occur in remote or sparsely populated areas where network coverage is poor. These areas could include border regions or particular internal regions of countries, where such regions may be mountainous, wilderness, or other uninhabitable terrain.

The network management entity 620 may obtain, one or more service level indicators, wherein the one or more service level indicators indicate one or more services of the non-terrestrial network which the user equipment is permitted to utilize. The service level indicators may be obtained from, or provided by, the IT system 610. As described with reference to figures 3 and 5 above, the one or more service level indicators indicate one or more services of the non-terrestrial network which the user equipment is permitted to utilize. In some embodiments, each of the one or more service level indicators is associated with a respective service, the services comprising: an SMS service, a voice service, and a data service. That is, the service level indicators as a whole may indicate which of the tariffs for the NTN is associated with the user equipment. For example, the service level indicators may indicate that the user equipment is permitted to utilize: (i) only an SMS service of the NTN; (ii) only SMS+Voice services of the NTN; or (iii) SMS+Voice+Data services of the NTN.

In the embodiment of figure 6, the at least one of the Home Subscriber Server (HSS), the Central Subscriber Database (CSDB), and the Unified data management (UDM), may obtain one or more service level indicators. The service level indicators obtained by the at least one of the Home Subscriber Server (HSS), the Central Subscriber Database (CSDB), and the Unified data management (UDM), are associated with the SMS and the voice services of the NTN. That is, the one or more service level indicators obtained by the Home Subscriber Server (HSS), the Central Subscriber Database (CSDB), and the Unified data management (UDM), may indicate whether the user equipment is permitted to utilize: (i) only an SMS service of the NTN; or (ii) only SMS+Voice services of the NTN.

The Policy and Charging Rules Function (PCRF) 622 and the Packet Data Network Gateway (PGW) 623 are also configured to obtain one or more service level indicators. The service level indicators obtained by the Policy and Charging Rules Function (PCRF) 622 and the Packet Data Network Gateway (PGW) 623 are associated with the data service of the NTN. That is, the one or more service level indicators obtained by the Policy and Charging Rules Function (PCRF) 622 and the Packet Data Network Gateway (PGW) 623, may indicate whether the user equipment is permitted to utilize the data service of the NTN.

The network management entity 620 may also be configured to determine one or more permitted services, of the one or more services of the non-terrestrial network, to provide the user equipment access to based on the service level indicators. If a service level indicator indicates that the user equipment is not permitted to utilize a service of the non-terrestrial network, then the network management entity prevents the user equipment from utilizing said service. Whereas, if a service level indicator indicates that the user equipment is permitted to utilize a service of the non-terrestrial network, then the network management entity enables the user equipment to utilize said service.

In the embodiment of figure 6, the at least one of the Home Subscriber Server (HSS), the Central Subscriber Database (CSDB), and the Unified data management (UDM) 625, may determined, based on the obtained one or more service level indicators, whether the user equipment is permitted to access the SMS service of the NTN and the voice service of the NTN. If it is determined that the user equipment is permitted to only access the SMS service of the NTN, and not the voice service of the NTN, then the IMS (Voice) APN may be suppressed in at least one of the Home Subscriber Server (HSS), the Central Subscriber Database (CSDB), and the Unified data management (UDM) 625, to prevent a user equipment from utilizing voice services of the NTN. Whereas, if it is determined, based on the one or more obtained service level indicators, that the user equipment is permitted to utilize both the SMS and the voice services of the NTN, then the IMS (Voice) APN will not be suppressed, and the user equipment will be able to utilize the SMS and the voice services of the NTN.

The Policy and Charging Rules Function (PCRF) 622 and the Packet Data Network Gateway (PGW) 623 may determine, based on the obtained one or more service level indicators, whether the user equipment is permitted to access the data service of the NTN. If it is determined that the user equipment is not permitted to only access the SMS service of the NTN, e.g. the user equipment is on an "NTN low" or "NTN mid" tariff, the Policy and Charging Rules Function (PCRF) 622 and the Packet Data Network Gateway (PGW) 623 may prevent a user equipment from utilizing the data service of the NTN. For example, the Data APN may be blocked in the Policy and Charging function (PCRF) 622 with the help of Data Core PGW 623. Whereas, if it is determined, based on the one or more obtained service level indicators, that the user equipment is permitted to utilize the data services of the NTN, the Policy and Charging Rules Function (PCRF) 622 and the Packet Data Network Gateway (PGW) 623 do not prevent a user equipment from utilizing the data service of the NTN, and the user equipment will be able to utilize the data service of the NTN.

The network management entity 620 may establish a connection between the user equipment and the non-terrestrial network 640; and provide the user equipment with the determined one or more permitted services via the establish connection. That is, a connection between the user equipment and the non-terrestrial network 640 may be established such that the user can utilize services of the non-terrestrial network which it is permitted to do so. For example, where the user equipment is permitted to utilize SMS and voice service of the NTN, but the user equipment is not permitted to utilize the data service of the NTN, and the network management entity has enabled the user equipment to utilize said service, but prevented the user equipment from utilizing the data service of the NTN, the user equipment may utilize the SMS and voice services of the NTN using the established connection.

In the embodiment shown in figure 6, this connection may be established and/or managed by the MME 628. In this configuration, the MME 628 is a single MME configured to serve both the PLMN ID of the terrestrial network 630 and the PLMN ID of the non-terrestrial network 640. As such, the MME is configured to establish and/or manage connection of the user equipment to the NTN 640, such that the use equipment can utilize the services of the NTN that the user equipment has been permitted to utilize by the other elements of the network management entity 620, as described above. The MME 628 may further be in communication with and/or operatively connected to a security gateway (SecGW) 629. The security gateway (SecGW) 629 is in communication with and/or operatively connected to the terrestrial network (TN) 630 and the non-terrestrial network (NTN) 640. The SecGW 629 may be used in the establishment of the connection between the user equipment and the NTN 640, such that the use equipment can utilize the permitted services of the NTN 640.

In an example method which the network management entity 620 is configured to carry out, where the user equipment is on an SMS+Voice only tariff, i.e. the "NTN Mid" tariff, a first service level indicator may be obtained by at least one of the Home Subscriber Server (HSS), the Central Subscriber Database (CSDB), and the Unified data management (UDM) 625, the first service level indicator being associated with associated with the SMS service and the voice service of the NTN. In this example, the first service level indicator indicates that the user equipment is permitted to utilize the SMS and Voice services of the NTN, and thereby enables the least one of the Home Subscriber Server (HSS), the Central Subscriber Database (CSDB), and the Unified data management (UDM) 625, to permit the user equipment, e.g. UE2, to utilize the SMS and Voice services of the NTN. That is, the IMS (Voice) APN is not suppressed by the at least one of the Home Subscriber Server (HSS), the Central Subscriber Database (CSDB), and the Unified data management (UDM).

Further, in this example, a service level indicator associated with data services may be obtained by at least one of a Policy and Charging Rules Function (PCRF) 622 and a Packet Data Network Gateway (PGW) 623. Where the user equipment, e.g. UE2, is on the SMS+Voice only tariff, i.e. the "NTN Mid" tariff, the second service level indicator indicates that the user equipment is not permitted to utilize the data service of the NTN. As such, the at least one of the Policy and Charging Rules Function (PCRF) 622 and the Packet Data Network Gateway (PGW) 623 will block or prevent the user equipment, e.g. UE2, from utilizing the data service of the NTN. For example, the Data APN may be blocked in the Policy and Charging function (PCRF) with the help of Data Core PGW.

In this example, a connection is established between the user equipment and the non-terrestrial network to provide the user equipment, e.g. UE2, with the SMS and voice services of the NTN, but not the data services of the NTN. This this connection may be established and/or managed by the MME along with the security gateway (SecGW) which is in communication with and/or operatively connected to the non-terrestrial network (NTN).

This network architecture, and the configuration of the network management entity 620 shown in figure 6, therefore allows for a benefit of selectively managing a user's access to a non-terrestrial network, whilst also allowing for the user's access to services of the terrestrial network to be maintained. Additionally, the use of an existing and/or singular MME to manage the connections to both the terrestrial network, and the non-terrestrial network, by assigning a PLMN ID to the non-terrestrial network which can be served by the MME, allows for existing telecommunications networks and infrastructure to be easily and cost-effectively enabled to perform the methods described.

Figure 7 shows an alternative implementation of a telecommunication system 700 of the current invention in the context of the 3GPP standardised protocol of the Fourth Generation (4G). Whilst the invention comprises the implementation of the telecommunication system 700 shown in figure 7, and the associated method, it will be appreciated that the implementation of the telecommunications system 700 may be modified or adapted in accordance with any of the previous or other embodiments described. That is, this implementation may perform the method according to figures 3 or 4, described above, and/or may comprise the elements of the part of particular implementation the telecommunications system 500 shown in figure 5 above.

The telecommunication system 700 comprises an IT system 710. The IT system 710 of the telecommunication system 700 of figure 7 may be the IT system 510 described with respect to figure 5 above, or the IT system 210 as described with respect to figure 2.

The telecommunication system 700 further comprises a network management system 720. The network management system 720 of the telecommunication system 700 of figure 7 may be the network management system 520 described with respect to figure 5 above, or the network management system 220 as described with respect to figure 2.

The network management system 720 comprises at least one of a Home Subscriber Server (HSS), a Central Subscriber Database (CSDB), and a Unified data management (UDM) 725. The at least one of the Home Subscriber Server (HSS), the Central Subscriber Database (CSDB), and the Unified data management (UDM) 725, may be configured to limited services of the NTN for a user equipment, such as SMS only or SMS+Voice only. The IMS (Voice) APN may be suppressed in at least one of the Home Subscriber Server (HSS), the Central Subscriber Database (CSDB) 725, to prevent a user equipment from utilizing voice services of the NTN. The network management system may further comprise a Central Monitoring System (CMS) 727 and a Multimedia messaging service (MSS) 726.

The network management system 720 further comprises two mobile management entities (MMEs) in communication with and/or operatively coupled to the at least one of the Home Subscriber Server (HSS), the Central Subscriber Database (CSDB), and the Unified data management (UDM). The MMEs may be further in communication with and/or operatively coupled to the CMS 727 and/or the MSS 726. An SGs interface may be positioned between the MMEs and the MSS 726. SMS services may go over the SGs interface. Where the IMS (Voice) APN is suppressed, i.e. the UE is on an SMS only tariff, the SMS services may go over the SGs interface. Where the UE is on an SMS+Voice only tariff, e.g. the "NTN mid" tariff, the user equipment is able to make Voice calls over IMS and send SMS over the SGs interface or IMS interface based on deployment.

The network management system 720 further comprises a Unified Data Repository (UDR) and/or a Subscription Profile Repository (SPR) 721 in communication with and/or operatively coupled to the IT system 710.

The network management system 720 further comprises a Policy and Charging Rules Function (PCRF) 722 and a Packet Data Network Gateway (PGW) 723. The Policy and Charging Rules Function (PCRF) 722 and the Packet Data Network Gateway (PGW) 723 are in communication with and/or operatively coupled to the Unified Data Repository (UDR) and/or the Subscription Profile Repository (SPR) 721. The Policy and Charging Rules Function (PCRF) 722 and the Packet Data Network Gateway (PGW) 723 may be used to prevent the user equipment from utilizing the data services of the NTN. For example, the Data APN may be blocked in the Policy and Charging function (PCRF) 722 with the help of Data Core PGW. The Packet Data Network Gateway (PGW) 723 may be in communication with and/or operatively coupled to an IP Multimedia Subsystem or IP Multimedia Core Network Subsystem (IMS) 723a and a Converged Charging Systems (CCS) 723b. In some examples, the mechanism described above will allow for user equipment connected to the NTN to use the PLMN ID from HSS for SMS but blocked for IMS Voice by HSS and blocked for data usage by PCRF and PGW.

The Packet Data Network Gateway (PGW) 723 is in communication with and/or operatively coupled to a signalling gateway (SGW) 724 which is in turn in communication with and/or operatively coupled to the MMEs 728a, 728b.

In the embodiment shown in figure 7, the MMEs comprises two MMEs 728a, 728b. That is, the network management entity 720 comprises both a dedicated MME for the terrestrial network 728a, and a dedicated MME for the non-terrestrial network 728b. The terrestrial network MME 728a is configured to manage and/or provide services of the terrestrial network 730 to a user equipment. The terrestrial network MME 728a is configured to serve the PLMN ID of the terrestrial network 730. The non-terrestrial network MME 728b is configured to manage and/or provide services of the non-terrestrial network 740 to a user equipment. The non-terrestrial network MME 728b is configured to serve the PLMN ID of the non-terrestrial network 740.

In an example, to provide the network management entity 720 shown in figure 7, a new MME may be initiated in a core network with a dedicated NTN PLMN ID for the NTN services, while utilizing existing other core network functions (SGW, PGW etc). The new NTN MME 728b can be assigned a new realm, PLMN ID for NTN which are sent to HSS/CSDB/UDM to allow or deny access based on tariff plan.

The network management entity 720 is configured to provide the same functionality as the network management entity 620 of figure 6. However, in the case of the network management entity 720 the non-terrestrial network MME 728b is configured to carry out the functions and method steps described above for maintaining, managing, and/or establishing the connection of the user equipment to the non-terrestrial network 740.

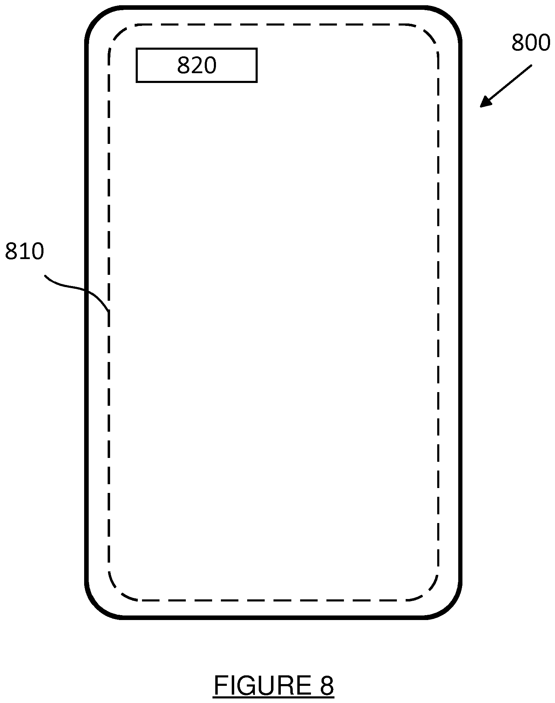

Figure 8 shows an example of a user equipment (UE) 800 in the form of a mobile device. The mobile device comprises a graphic display 810. Figure 8 shows a graphic 820 indicating that the mobile device is connected to an NTN. Current mobile devices do not support the display of graphics for indicating connection to an NTN, such as then NTN logo. Therefore, users of current, or legacy mobile device will not be able to see when they are on NTN coverage. To address this the network management entity, such as the network management entity shown in figures 2, 5, 6, and 7, may send NTN information to a mobile device 800 using Network Identity and Time Zone (NITZ). In some embodiments, an MME, such as the MME of the network management entity 620 or the non-terrestrial network MME of the network management entity 720, shown in figures 6 and 7 respectively, will provide the information to the mobile device 800 using NITZ based on the PLMN ID user of the mobile device is connected to. That is, when the user of the mobile device 800 is connected to the PLMN ID associated with the NTN, the MME will provide information to the mobile device 800 using NITZ that the mobile device 800 is connected to the NTN. The logic for such a provision may rest in MME itself. Once the network management entity has provided this information to the mobile device 800, the mobile device will be able to display a graphic 820, on the mobile device graphic display 810, indicating that the mobile device 800 is connected to the NTN, such as in the form of an NTN logo or as a banner. An advantage of this embodiment and the implementation of the display of graphics for indicating connection to an NTN in this manner, is that it can be supported on all current and legacy mobile devices and existing MMEs. Hence this solution could be easy deployed in current telecommunications networks and systems. In particular, it does not require a sim change for the mobile device or an updated version of the device itself.

As described in the embodiments above, the UE will seek to connect to the non-terrestrial network when the UE is unable to connect to the terrestrial network. For example, the UE may be out of a coverage area of the terrestrial network, such that services of the terrestrial network, e.g. mobile communication services, cannot be provided by the terrestrial network to the UE.

In any of the above embodiments, when the UE is unable to connect to the TN, the MME (which may be either a combined MME or dedicated TN MME) may send NTN PLMN ID as EPLMN in NAS so that UE can select NTN network. This may provide a faster and better experience for the user. In this case the current session of the user may be disconnected which means there may be a drop of the data service while the user is switching from the TN to the NTN. The user may also experience stalling of videos if they are streaming in case enough buffer is not present and/or the data services of the NTN are not available to the user or not able to provide sufficiency bandwidth. However, if the buffer of videos is high enough then the user may not experience any stalling.

However, given the limited bandwidth of the NTN, it is important that the resources of the NTN are only utilized when necessary. For example, at least initially, the EM spectrum allocated for NTNs by mobile network operators and regulators will be limited in bandwidth, hence users will have better experience when they are connected to TN compared to NTN. In particular, as discussed above, users may be limited in the services they are able to access whilst connected to an NTN, whereas the services for a TN are not limited in such a manner.

As users will have a better experience when connected to the TN, it is envisaged that the user equipment will reconnect to the TN, from the NTN, as soon as the TN is available. It is also important that the user equipment is able to maintain voice and/or data session continuity when switching from the NTN to the TN.

Any of the methods described above may, therefore, comprise an additional step of disconnecting the user equipment from the non-terrestrial network and/or establishing a connection between the user equipment and the terrestrial network. In some embodiments, only the data services are disconnected from the non-terrestrial network. This may occur if it is required by the MNO when, for example, there is insufficient bandwidth on the NTN. These steps may be performed in response to a request to reconnect to the terrestrial network when the terrestrial network becomes available. This request may be provided by the user equipment to the network management entity. Where the invention is implemented in accordance with the embodiment shown in figure 7 above, the NTN MME may send the TN PLMN ID as EPLMN in NAS. The network management entity may also perform "S10 mobility". That is the S10 interface as described in 3GPP TS 23.401: "General Packet Radio Service (GPRS) enhancements for Evolved Universal Terrestrial Radio Access Network (E-UTRAN) access", and 3GPP TS 23.402: "Architecture enhancements for non-3GPP accesses". Additionally, components of the NTN, such as the NTN radio towers or antenna, may be required to define the TN radio towers or antenna as neighbors.

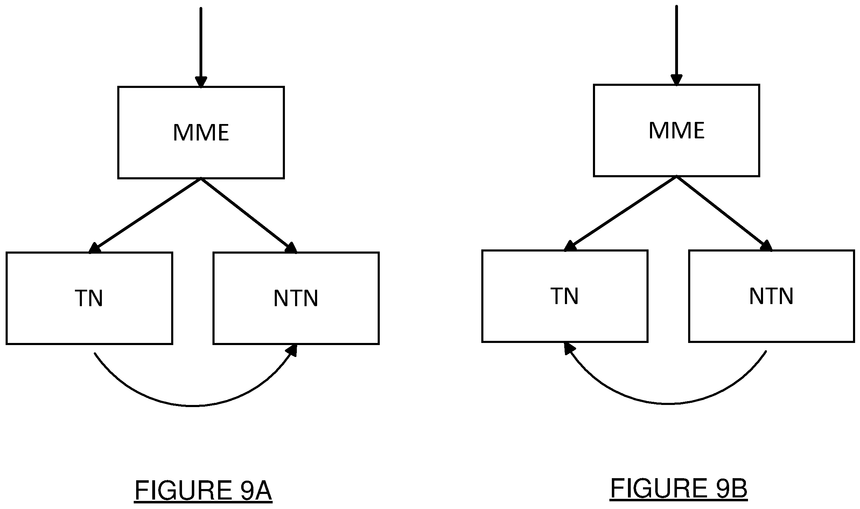

Figures 9A and 9B show examples of the connection/disconnection between the terrestrial and non-terrestrial networks. Figure 9A shows a session disconnection from the terrestrial network and the migration to the non-terrestrial network. The connection to the non-terrestrial network may be performed in accordance with any on the methods described in figures 3, 4, 5, and 6 above. In particular, in figure 9A the mobile telecommunications network comprises a singular MME configures to serve both the TN PLMN ID and the NTN PLMN ID, in accordance with figure 6 described above.

In some examples, due to limited NTN Bandwidth, a data session for the user equipment can be disconnected when connecting other services of the user equipment to the NTN. For example, when voice services are moved/passed from the TN to the NTN, e.g. during an active voice call, the data services can be disconnected entirely such that data is not available to the user equipment. This may occur even if the user has a plan which would allow connection to, or use of, data services via the NTN, e.g. if the user has an "NTN High" tariff which may correspond to the user equipment being permitted to utilize SMS, Voice, and Data services. At the same time, a Voice call can continue seamlessly for mobility from TN to NTN. For example, the voice services for the user equipment can be maintained and moved from the TN to the NTN, in accordance with any of the above-described embodiments, whilst the data services for the user equipment are disconnected, such that the data services are unavailable to the user equipment. The data services may remain unavailable to the user equipment whilst the user equipment is using the voice services, for example whilst in an active voice call, and be restored or reconnected once the voice call has been ended.

In other examples, all services available to the user equipment, e.g. SMS, Voice, and data, may be moved/passed from the TN to the NTN when available. In this way, an operator can ensure seamless mobility for all services.

Figure 9B shows the reconnection of the user equipment to the terrestrial network.

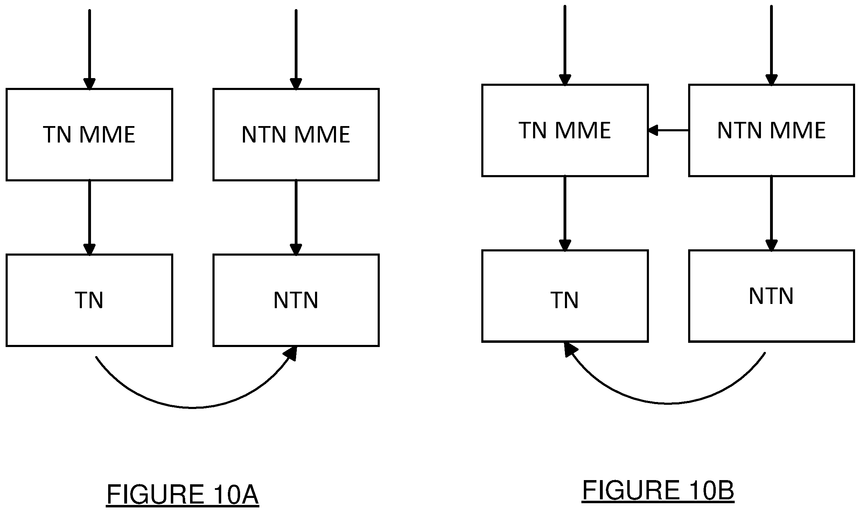

Figures 10A and 10B also show examples of the connection/disconnection between the terrestrial and non-terrestrial networks. Figure 10A shows a session disconnection from the terrestrial network and the migration to the non-terrestrial network. The connection to the non-terrestrial network may be performed in accordance with any on the methods described in figures 3, 4, 5, and 7 above. In particular, in figure 10A the mobile telecommunications network comprises a dedicated NTN MME configures to serve the NTN PLMN ID, and a TN MME configured to serve the TN PLMN ID, in accordance with figure 7 described above.

In some examples, due to limited NTN Bandwidth, a data session for the user equipment can be disconnected when connecting other services of the user equipment to the NTN. For example, when voice services are moved/passed from the TN to the NTN, e.g. during an active voice call, the data services can be disconnected entirely such that data is not available to the user equipment. This may occur even if the user has a plan which would allow connection to, or use of, data services via the NTN, e.g. if the user has an "NTN High" tariff which may correspond to the user equipment being permitted to utilize SMS, Voice, and Data services. At the same time, a Voice call can continue seamlessly for mobility from TN to NTN. For example, the voice services for the user equipment can be maintained and moved from the TN to the NTN, in accordance with any of the above-described embodiments, whilst the data services for the user equipment are disconnected, such that the data services are unavailable to the user equipment. The data services may remain unavailable to the user equipment whilst the user equipment is using the voice services, for example whilst in an active voice call, and be restored or reconnected once the voice call has been ended. In this example, the TN MME may send the NTN PLMN ID as EPLMN in NAS so that the user equipment can select the NTN network faster and provide better experience to user. In this case the session for voice call will continue while data will be disconnected. This process of voice call continuity while data disconnection can be performed based on a QoS Class Identifier (QCI) at Radio.

In other examples, all services available to the user equipment, e.g. SMS, Voice, and data, may be moved/passed from the TN to the NTN when available. In this way, an operator can ensure seamless mobility for all services. In this example, the TN MME can send NTN PLMN ID as EPLMN in NAS so that UE can select the NTN faster.

Figure 10B shows the reconnection of the user equipment to the terrestrial network. As described above, the NTN MME may send the TN PLMN ID as EPLMN in NAS as part of the reconnection to the terrestrial network.

The embodiments and examples described above, may be carried out using existing network architecture and standard features and capabilities, which may be designed to offer commercial services. However, additional enhancements may be required to realise the full potential of the invention and may require successfully collaboration between mobile network operators and/or service providers. More specifically collaboration between mobile network operators (MNOs) may be needed to support tight interworking between key network elements and functions, e.g. OSS, Orchestrations. In such cases MNOs may be able to leverage their own Radio and Transmission assets which they have deployed in order to realise service level, commercial and operational benefits. These may include:
- Capacity enhancement for a host: A particular mobile network operator may be able to enhance utilisation of their own Radio and Transmission asset(s) by activating or using portions of the EM spectrum that are owned or controlled by alternative/other mobile network operators. This may allow the particular mobile network operator to improve their own network capacity or performance. A host (e.g. an MNO) could also "lease" their own portions of the EM spectrum; available bandwidth; or a particular slice(s) from their already deployed spectrum/transmission resources.
- Coverage improvement: A mobile network operator may also be able to activate or use shared portions of the EM spectrum from an alternative mobile network operator or lease a slice within the alternative MNO host's own spectrum, on a site by site/ region by region basis, in order to enhance their coverage with the shared spectrum or reduce the operational cost in quiet times e.g. 11pm to 5am.

A telecommunications network as described herein may be a cellular network serving one or more User Equipments, UEs. Examples of the UE include various fixed and mobile devices that transmit and receive user data and/or various kinds of control information to and from a base station. The UE may be referred to as a terminal equipment (TE), a mobile station (MS), a mobile terminal (MT), a user terminal (UT), a subscriber station (SS), a wireless device, a personal digital assistant (PDA), a wireless modem, a handheld device, etc.

Whilst the above examples are described in relation to specific radio access networks (e.g., 4G and 5G radio access networks), these methods, techniques, apparatuses, and systems may be applied to a variety of wireless multiple access systems. Examples of multiple access systems include CDMA, FDMA, TDMA, OFDMA, SC-FDMA, and MC-FDMA. CDMA may be embodied through radio technology such as UTRA or CDMA2000. TDMA may be embodied through radio technology such as GSM, GPRS, or EDGE. OFDMA may be embodied through radio technology such as IEEE 802.11 (Wi-Fi), IEEE 802.16 (WiMAX), IEEE 802.20, or E-UTRA. UTRA is a part of a UMTS. 3GPP LTE is a part of E-UMTS using E-UTRA. 3GPP LTE employs OFDMA in DL and SC-FDMA in UL. LTE-A is an evolved version of 3GPP LTE. 3GPP NR employs OFDMA for both downlink and uplink and can operate in both FDD and TDD. For convenience of description, it is assumed that the present invention is applied to 3GPP NR. However, the technical features of the present invention are not limited thereto. For example, although the following detailed description is given based on a mobile communication system corresponding to a 3GPP NR system, aspects of the present invention that are not specific to 3GPP NR are applicable to other mobile communication systems. Moreover, the technical features of the present invention may be applied to future iterations of multiple access systems defined in 3GPP standards, such as (but not limited to) 6G.

The examples may be carried out on any suitable data processing device, such as a personal computer, laptop, mobile telephone, server, virtual machine, and the like. The above description of the systems and methods has been simplified for purposes of discussion, and is intended to provide a specific example to illustrate the invention. Different types of systems and methods may be used, as will be appreciated by the skilled person. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more FPGAs, and/or one or more ASICs, and/or one or more DSPs, and/or other hardware arrangements. Method steps implemented in flowcharts contained herein, or as described above, may each be implemented by corresponding respective modules. Moreover, multiple method steps implemented in flowcharts contained herein, or as described above, may be implemented together by a single module.

Any of the methods described herein may be implemented as computer software or a "computer program". The computer program may be configured to control a network entity (e.g., a server or group of servers) to perform any method according to the disclosure. A network entity (e.g., a server or group of servers) within a cellular network may also be provided, configured to operate in accordance with certain methods disclosed herein. For example, the network entity may include a processor and at least one communication interface, particularly comprising one or both of a transmitter and receiver.

A storage medium and a transmission medium carrying the computer program are also provided. The computer program may comprise one or more instructions, or code, that, when executed by a computer, causes the methods described to be performed. A computer program may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM, or a Blu-ray disc), or a memory (such as a ROM, a RAM, EPROM, EEPROM, Flash memory or a portable/removable memory device), etc. The transmission medium may be a communications signal, a data broadcast, a communications link between two or more computers, etc.

Each feature disclosed in this specification, unless stated otherwise, may be replaced by alternative features serving the same, equivalent, or similar purpose. Thus, unless stated otherwise, each feature disclosed is one example only of a generic series of equivalent or similar features.

As used herein, including in the claims, unless the context indicates otherwise, singular forms of the terms herein are to be construed as including the plural form and vice versa. For instance, unless the context indicates otherwise, a singular reference herein including in the claims, such as "a" or "an" (such as a UE, a network entity, a server or a cell) means "one or more" (for instance one or more UEs, one or more network entities, one or more servers, or one or more cells). Throughout the description and claims of this disclosure, the words "comprise", "including", "having" and "contain" and variations of the words, for example "comprising" and "comprises" or similar, mean "including", and are not intended to (and do not) exclude other components.

The use of any and all examples, or exemplary language ("That is", "such as", "for example" and like language) provided herein, is intended merely to better illustrate the invention, and does not indicate a limitation on the scope of the invention unless otherwise claimed. No language in the specification should be construed as indicating any nonclaimed element as essential to the practice of the invention.

Any steps described in this specification may be performed in any order or simultaneously unless stated or the context requires otherwise. Moreover, where a step is described as being performed after a step, this does not preclude intervening steps being performed.

All of the aspects and/or features disclosed in this specification may be combined in any combination, except combinations where at least some of such features and/or steps are mutually exclusive. As described herein, there may be particular combinations of aspects that are of further benefit, such the aspects of determining a set of compensation parameters and applying a set of compensation parameters to measurements. In particular, the preferred features of the invention are applicable to all aspects of the invention and may be used in any combination. Likewise, features described in nonessential combinations may be used separately (not in combination).

A method of manufacturing and/or operating any of the devices disclosed herein is also provided. The method may comprise steps of providing each of the features disclosed and/or configuring or using the respective feature for its stated function.

The disclosure further comprises examples according to the following clauses:
Clause 1. A method of managing access to one or more services for a user equipment (UE) on a network, wherein the network includes a terrestrial network (TN) and a non-terrestrial network (NTN), the method comprising:
   receiving a request for connecting the user equipment to the non-terrestrial network;
   obtaining a public land mobile network identifier (PLMN ID) for the non-terrestrial network;
   determining a service level for the user equipment based on the public land mobile network identifier for the non-terrestrial network;
   generating one or more service level indicators for the user equipment based on the determined service level, wherein the one or more service level indicators indicate one or more services of the non-terrestrial network which the user equipment is permitted to utilize;
   providing the service level indicators to a network management entity, wherein the one or more service level indicators enable the network management entity to provision the user equipment with the one or more services of the non-terrestrial network which the user equipment is permitted to utilize.
Clause 2. The method of clause 1, wherein the services comprising: an SMS service, a voice service, and a data service.
Clause 3. The method of clause 2, wherein each of the one or more service level indicators is associated with a respective service.
Clause 4. The method of clause 2 or clause 3, wherein providing the service level indicators to a network management entity comprises: providing the service level indicator associated with the SMS service to at least one of a Home Subscriber Server (HSS), a Central Subscriber Database (CSDB), and a Unified data management (UDM).
Clause 5. The method of any of clauses 2 to 4, wherein providing the service level indicators to a network management entity comprises: providing the service level indicator associated with the voice service to at least one of a Home Subscriber Server (HSS), a Central Subscriber Database (CSDB), and a Unified data management (UDM).
Clause 6. The method of any one of clauses 2 to 5, wherein providing the service level indicators to a network management entity comprises: providing the service level indicator associated with data services to at least one of a Policy and Charging Rules Function (PCRF) and a Packet Data Network Gateway (PGW).
Clause 7. The method of any previous clause, wherein the request for connecting the user equipment to the non-terrestrial network is received in response to the user equipment being unable to connect to the terrestrial network.
Clause 8. A method of providing a user equipment with access to one or more services of a non-terrestrial network by a network management entity, comprising:
   receiving, at the network management entity, a request for connecting the user equipment to the non-terrestrial network;
   obtaining, one or more service level indicators, wherein the one or more service level indicators indicate one or more services of the non-terrestrial network which the user equipment is permitted to utilize;
      determining one or more permitted services, of the one or more services of the non-terrestrial network, to provide the user equipment access to based on the service level indicators, wherein:
      if a service level indicator indicates that the user equipment is not permitted to utilize a service of the non-terrestrial network, then the network management entity prevents the user equipment from utilizing said service; or
      if a service level indicator indicates that the user equipment is permitted to utilize a service of the non-terrestrial network, then the network management entity enables the user equipment to utilize said service;
   establishing a connection between the user equipment and the non-terrestrial network; and providing the user equipment with the determined one or more permitted services via the establish connection.
Clause 9. The method of clause 8, wherein the services comprising: an SMS service, a voice service, and a data service.
Clause 10. The method of clause 9, wherein each of the one or more service level indicators is associated with a respective service.
Clause 11. The method of clause 9 or clause 10 wherein, when the service is an SMS service, determining if the SMS service is a permitted service comprises: providing the service level indicator associated with the SMS service to at least one of a Home Subscriber Server (HSS), a Central Subscriber Database (CSDB), and a Unified data management (UDM).
Clause 12. The method of any one of clause 8 to 11 wherein, when the service is a voice service, determining if the voice service is a permitted service comprises: providing the service level indicator associated with the voice service to at least one of a Home Subscriber Server (HSS), a Central Subscriber Database (CSDB), and a Unified data management (UDM).
Clause 13. The method of any of clauses 8 to 12 wherein, when the service is a data service, determining if the data service is a permitted service comprises: providing the service level indicator associated with data services to at least one of a Policy and Charging Rules Function (PCRF) and a Packet Data Network Gateway (PGW).
Clause 14. The method of any of clauses 8 to 13 wherein, the network management entity comprises a mobility management entity (MME) configured to serve a plurality of different public land mobile network identifiers comprising: a non-terrestrial network public land mobile network identifier and a terrestrial network public land mobile network identifier.
Clause 15. The method of any of clauses 8 to 14 wherein, the network management entity comprises a first mobility management entity (MME) associated with a terrestrial network, and a second mobility management entity (MME) associated with the non-terrestrial network.
Clause 16. The method of any of clauses 8 to 15 wherein the method further comprises: disconnecting the user equipment from the non-terrestrial network; and establishing a connection between the user equipment and a terrestrial network (TN).
Clause 17. The method of clause 16, wherein the user equipment is disconnected from the data service of the non-terrestrial network.
Clause 18. The method of any of clauses 8 to 17, wherein the method further comprises providing information to the user equipment to enable the user equipment to display a graphic indicating that the user equipment is connected to the non-terrestrial network.
Clause 19. The method of clause 18, wherein the user equipment is a mobile device, the mobile device comprises a graphic display for displaying the graphic, and wherein, optionally, the graphic is an NTN logo or a banner.
Clause 20. A system configured to carry out a method for managing access to one or more services for a user equipment (UE) on a network, wherein the network includes a terrestrial network (TN) and a non-terrestrial network (NTN), the system configured to:
   receive a request for connecting the user equipment to the non-terrestrial network;
   obtain a public land mobile network identifier (PLMN ID) for the non-terrestrial network;
   determine a service level for the user equipment based on the public land mobile network identifier for the non-terrestrial network;
   generate one or more service level indicators for the user equipment based on the determined service level, wherein the one or more service level indicators indicate one or more services of the non-terrestrial network which the user equipment is permitted to utilize;
   provide the service level indicators to a network management entity, wherein the one or more service level indicators enable the network management entity to provision the user equipment with the one or more services of the non-terrestrial network which the user equipment is permitted to utilize.
Clause 21. The system of clause 20, wherein the services comprising: an SMS service, a voice service, and a data service.
Clause 22. The system of clause 21, wherein each of the one or more service level indicators is associated with a respective service.
Clause 23. The system of clause 21 or clause 22, wherein when the system provides the service level indicators to a network management entity, the system is configured to: provide the service level indicator associated with the SMS service to at least one of a Home Subscriber Server (HSS), a Central Subscriber Database (CSDB), and a Unified data management (UDM).
Clause 24. The system of any of clauses 21 to 23, wherein when the system provides the service level indicators to a network management entity, the system is configured to: provide the service level indicator associated with the voice service to at least one of a Home Subscriber Server (HSS), a Central Subscriber Database (CSDB), and a Unified data management (UDM).
Clause 25. The system of any one of clauses 21 to 24, wherein when the system provides the service level indicators to a network management entity, the system is configured to: provide the service level indicator associated with data services to at least one of a Policy and Charging Rules Function (PCRF) and a Packet Data Network Gateway (PGW).
Clause 26. The system of any previous clause, wherein when the requests for a connection of the user equipment to the non-terrestrial network is received in response to the user equipment being unable to connect to the terrestrial network.
Clause 27. A system configured to carry out a method of providing a user equipment with access to one or more services of a non-terrestrial network by a network management entity, wherein the system is configured to:
   receive, at the network management entity, a request for connecting the user equipment to the non-terrestrial network;
   obtain, one or more service level indicators, wherein the one or more service level indicators indicate one or more services of the non-terrestrial network which the user equipment is permitted to utilize;
      determine, one or more permitted services, of the one or more services of the non-terrestrial network, to provide the user equipment access to based on the service level indicators, wherein:
      if a service level indicator indicates that the user equipment is not permitted to utilize a service of the non-terrestrial network, then the network management entity prevents the user equipment from utilizing said service; or
      if a service level indicator indicates that the user equipment is permitted to utilize a service of the non-terrestrial network, then the network management entity enables the user equipment to utilize said service;
   establish a connection between the user equipment and the non-terrestrial network; and providing the user equipment with the determined one or more permitted services via the establish connection.
Clause 28. The system of clause 27, wherein the services comprising: an SMS service, a voice service, and a data service.
Clause 29. The system of clause 28, wherein each of the one or more service level indicators is associated with a respective service.
Clause 30. The system of clause 28 or clause 29 wherein, when the service is an SMS service, when the system determines if the SMS service is a permitted service the system is configured to: provide the service level indicator associated with the SMS service to at least one of a Home Subscriber Server (HSS), a Central Subscriber Database (CSDB), and a Unified data management (UDM).
Clause 31. The system of any one of clauses 28 to 30 wherein, when the service is a voice service, when the system determines if the voice service is a permitted service the system is configured to: provide the service level indicator associated with the voice service to at least one of a Home Subscriber Server (HSS), a Central Subscriber Database (CSDB), and a Unified data management (UDM).
Clause 32. The system of any of clauses 28 to 31 wherein, when the service is a data service, when the system determines if the data service is a permitted service the system is configured to: provide the service level indicator associated with data services to at least one of a Policy and Charging Rules Function (PCRF) and a Packet Data Network Gateway (PGW).
Clause 33. The system of any of clauses 27 to 32 wherein, the network management entity comprises a mobility management entity (MME) configured to serve a plurality of different public land mobile network identifiers comprising: a non-terrestrial network public land mobile network identifier and a terrestrial network public land mobile network identifier.
Clause 34. The system of any of clauses 27 to 32 wherein, the network management entity comprises a first mobility management entity (MME) associated with a terrestrial network, and a second mobility management entity (MME) associated with the non-terrestrial network.
Clause 35. The system of any of clauses 27 to 34 wherein the method further comprises: disconnecting the user equipment from the non-terrestrial network; and establishing a connection between the user equipment and a terrestrial network (TN).
Clause 36. The system of clause 35 wherein the user equipment is disconnected from the data service of the non-terrestrial network.
Clause 37. The system of any of clauses 27 to 36, wherein the method further comprises providing information to the user equipment to enable the user equipment to display a graphic indicating that the user equipment is connected to the non-terrestrial network.
Clause 38. The system of clause 37, wherein the user equipment is a mobile device, the mobile device comprises a graphic display for displaying the graphic, and wherein, optionally, the graphic is an NTN logo or a banner.
Clause 39. A computer program comprising computer readable instructions which, when executed by one or more processors, cause the one or more processors to carry out a method according to any on of clauses 1 to 19.
Clause 40. A computer readable medium having stored thereon the computer program of clause 39.
Clause 41. The computer readable medium of clause 40, wherein the computer readable medium is a non-transitory computer readable medium.

## Claims

1. A method of managing access to one or more services for a user equipment (UE) on a network, wherein the network includes a terrestrial network (TN) and a non-terrestrial network (NTN), the method comprising:
receiving a request for connecting the user equipment to the non-terrestrial network;
obtaining a public land mobile network identifier (PLMN ID) for the non-terrestrial network;
determining a service level for the user equipment based on the public land mobile network identifier for the non-terrestrial network;
generating one or more service level indicators for the user equipment based on the determined service level, wherein the one or more service level indicators indicate one or more services of the non-terrestrial network which the user equipment is permitted to utilize;
providing the service level indicators to a network management entity, wherein the one or more service level indicators enable the network management entity to provision the user equipment with the one or more services of the non-terrestrial network which the user equipment is permitted to utilize.

2. The method of claim 1, wherein the services comprise: an SMS service, a voice service, and a data service; and, optionally, each of the one or more service level indicators is associated with a respective on of the services.

3. The method of claim 2, wherein providing the service level indicators to a network management entity comprises: providing a service level indicator associated with the SMS service to at least one of a Home Subscriber Server (HSS), a Central Subscriber Database (CSDB), and a Unified data management (UDM).

4. The method of claim 2 or claim 3, wherein providing the service level indicators to a network management entity comprises: providing a service level indicator associated with the voice service to at least one of a Home Subscriber Server (HSS), a Central Subscriber Database (CSDB), and a Unified data management (UDM).

5. The method of any one of claims 2 to 4, wherein providing the service level indicators to a network management entity comprises: providing a service level indicator associated with data services to at least one of a Policy and Charging Rules Function (PCRF) and a Packet Data Network Gateway (PGW).

6. The method of any previous claim, wherein the request for connecting the user equipment to the non-terrestrial network is received in response to the user equipment being unable to connect to the terrestrial network.

7. A method of providing a user equipment with access to one or more services of a non-terrestrial network by a network management entity, comprising:
receiving, at the network management entity, a request for connecting the user equipment to the non-terrestrial network;
obtaining, one or more service level indicators, wherein the one or more service level indicators indicate one or more services of the non-terrestrial network which the user equipment is permitted to utilize;
determining one or more permitted services, of the one or more services of the non-terrestrial network, to provide the user equipment access to based on the service level indicators, wherein:
if a service level indicator indicates that the user equipment is not permitted to utilize a service of the non-terrestrial network, then the network management entity prevents the user equipment from utilizing said service; or
if a service level indicator indicates that the user equipment is permitted to utilize a service of the non-terrestrial network, then the network management entity enables the user equipment to utilize said service;
establishing a connection between the user equipment and the non-terrestrial network; and providing the user equipment with the determined one or more permitted services via the establish connection.

8. The method of claim 7, wherein the services comprise: an SMS service, a voice service, and a data service; and, optionally, each of the one or more service level indicators is associated with a respective on of the services.

9. The method of claim 8 wherein, when the service is an SMS service, determining if the SMS service is a permitted service comprises: providing the service level indicator associated with the SMS service to at least one of a Home Subscriber Server (HSS), a Central Subscriber Database (CSDB), and a Unified data management (UDM).

10. The method of claim 8 or claim 9 wherein, when the service is a voice service, determining if the voice service is a permitted service comprises: providing the service level indicator associated with the voice service to at least one of a Home Subscriber Server (HSS), a Central Subscriber Database (CSDB), and a Unified data management (UDM).

11. The method of any of claims 7 to 10 wherein, when the service is a data service, determining if the data service is a permitted service comprises: providing the service level indicator associated with data services to at least one of a Policy and Charging Rules Function (PCRF) and a Packet Data Network Gateway (PGW).

12. The method of any of claims 7 to 11 wherein, the network management entity comprises a mobility management entity (MME) configured to serve a plurality of different public land mobile network identifiers comprising: a non-terrestrial network public land mobile network identifier and a terrestrial network public land mobile network identifier.

13. The method of any of claims 7 to 12 wherein, the network management entity comprises a first mobility management entity (MME) associated with a terrestrial network, and a second mobility management entity (MME) associated with the non-terrestrial network.

14. The method of any of claims 7 to 13 wherein the method further comprises: disconnecting the user equipment from the non-terrestrial network; and establishing a connection between the user equipment and a terrestrial network (TN).

15. A system configured to carry out the method of any one of claims 1 to 14.
